(19) Europäisches Patentamt
European Patent Office
Office européen des brevets

(11) **EP 2 852 174 A1**

(12) **EUROPÄISCHE PATENTANMELDUNG**

(43) Veröffentlichungstag:
**25.03.2015 Patentblatt 2015/13**

(51) Int Cl.:
*H04Q 9/00* (2006.01)  *H04L 9/00* (2006.01)

(21) Anmeldenummer: **14180516.8**

(22) Anmeldetag: **11.08.2014**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(30) Priorität: **12.08.2013  DE 102013215928**

(71) Anmelder: **Siemens Aktiengesellschaft**
**80333 München (DE)**

(72) Erfinder: **Bußer, Jens-Uwe**
**85579 Neubiberg (DE)**

(54) **Verfahren und System zur Aggregation von Messwerten zur Überwachung und Steuerung eines Verteilnetzes**

(57)    In dem erfindungsgemäßen Verfahren und System zur Aggregation von Messwerten zur Überwachung und Steuerung eines Verteilnetzes werden die Messwerte von einer Anzahl N intelligenten Messeinrichtungen ermittelt und an einen Datenkonzentrator unter Verwendung eines no-leakage-Protokolls übermittelt und aggregiert, wobei als erster Verfahrensschritt die N Messeinrichtungen in K Untergruppen (21, 22, 23, 24) mit $N_1$ bis $N_k$ Messeinrichtungen zugeordnet werden und im nächsten Verfahrensschritt das no-leakage-Protokoll auf jede einzelne Untergruppe (21, 22, 23, 24) angewendet wird, wobei in jeder Messeinrichtung $M_k$ der Untergruppe K jeweils $N_k$ Teilwerte gebildet werden.

FIG 2

EP 2 852 174 A1

**Beschreibung**

Die Erfindung betrifft ein Verfahren und ein System zur Aggregation von Messwerten zur Überwachung und Steuerung eines Verteilnetzes, die von einer Anzahl N intelligenten Messeinrichtungen, beispielsweise intelligenten Stromzählern (Smart Meter), ermittelt und an einen Datenkonzentrator unter Verwendung eines no-leakage-Protokolls übermittelt und aggregiert werden.

Traditionelle Messeinrichtungen zur Erfassung des fluktuierenden Verbrauchs eines Gutes, beispielsweise elektromechanische Stromzähler, Wasser- oder Gaszähler, zeigen nur den kumulierten Verbrauchswert des Gutes an. Bei einem elektromechanischen Stromzähler wird beispielsweise die kumulierte Gesamtenergie mittels eines Rollenzählwerks angezeigt, welches manuell abgelesen werden muss. Zur Ermittlung des Verbrauchs, beispielsweise innerhalb eines Jahres, muss der im vorherigen Jahr abgelesene Wert von dem aktuell abgelesenen Wert abgezogen werden. Diese Daten werden lediglich zu Abrechnungszwecken genutzt. Eine Nutzung zur Überwachung bzw. Steuerung von Verteilnetzen ist damit nicht möglich.

Moderne intelligente Messeinrichtungen, die mehr Rechen- und Kommunikationsfähigkeiten umfassen, beispielsweise intelligente elektronische Zähler, können auch zur Überwachung und Unterstützung der Steuerung eines Verteilnetzes eingesetzt werden. Dazu ermittelt eine solche intelligente Messeinrichtung beispielsweise einen Verbrauchswert, der über eine viel kürzere Zeitspanne, beispielsweise wenige Stunden, wenige Minuten oder wenige Sekunden, kumuliert wurde und sendet diesen kumulierten Messwert an einen Datenkonzentrator, der sich beispielsweise in der nächstgelegenen Ortsnetzstation befindet. Auch andere lokale Parameter, wie elektrische Spannung, Stromstärke, usw. können von den intelligenten Messeinrichtungen dezentral erfasst und an den Datenkonzentrator gesendet werden. Dort werden die Messwerte vieler intelligenter Messeinrichtungen gesammelt und beispielsweise über eine Mobilfunkverbindung, eine Standleitung, beispielsweise in Form eines Lichtwellenleiters oder einer Mikrowellenverbindung, an eine zentrale Auswertestelle des Messstellenbetreibers weitergeleitet.

In einer Vielzahl von Ländern dürfen solche, in kurzen Zeitabständen ermittelten Messwerte einer einzelnen Messeinrichtung aus Gründen des Schutzes personenbezogener Daten nur aggregiert, das heißt mit den Messwerten einer Vielzahl von anderen Verbrauchern beziehungsweise Messeinrichtungen zusammen, weitergeleitet werden, um die Erstellung eines Nutzerprofils für einen einzelnen Verbraucher zu verhindern.

Um die Übertragung der einzelnen Messwerte einer Messeinrichtung sicherzustellen, werden diese üblicherweise verschlüsselt sowie authentizitäts- und integritätsgeschützt, beispielsweise mit einem Transportschichtsicherheitsprotokoll TLS oder Internetsicherheitsprotokoll IPsec, an den Datenkonzentrator und von dort an eine Auswertestelle des Messstellenbetreibers übertragen. Dem Messstellenbetreiber oder auch einem Angreifer mit Zugang zum Datenkonzentrator, beispielsweise ein direkt physikalischer Zugang oder auch per Fernzugriff, wäre es prinzipiell möglich, auf die Messdaten einzelner Messeinrichtungen zuzugreifen und damit Profile einzelner Verbraucher zu erhalten.

Als no-leakage-Protokolle werden Aggregationsverfahren bezeichnet, mit denen Messwerte von mehreren Messeinrichtungen in einem Datenkonzentrator, beispielsweise einer Ortsnetzstation, zu einem Gesamtverbrauch aggregiert werden, ohne dass die Messwerte einzelner Messeinrichtungen bekannt werden können. Ein solches no-leakage-Protokoll wird beispielsweise in dem Artikel von Flavio D. Garcia, Bart Jacobs, "Privacyfriendly Energy-metering via Homomorphic Encryption", 6th Workshop on Security and Trust Management (STM 2010), Letter Notes in Computer Science, Bnd. 6710, Seiten 226 - 238, 2011, beschrieben. Als Aggregationsverfahren wird dabei ein partiell homomorphes, additives Verschlüsselungsverfahren verwendet, bei dem das Produkt der verschlüsselten Werte gleich der verschlüsselten Summe der Werte ist.

$$\{m_1\}_P * \{m_2\}_P = \{m_1 + m_2\}_P$$

wobei $\{m\}_P$ die mit einem öffentlichen homomorphen Schlüssel P verschlüsselte Zahl m darstellt. Diese Anforderung wird beispielsweise von dem Kryptosystem von P. Paillier, "Public-Key cryptosystems based on composite degree residuosity classes", Jacques Stern, editor, Advances in Cryptology (EURO-CRYPT' 99), Volume 1592 of Lecture Notes in Computer Science, Kapitel 16, Seiten 223-238, Springer Berlin Heidelberg, 1999, erfüllt.

In dem no-leakage-Protokoll nach Garcia und Jacobs wird jeder Messeinrichtung $M_i$ ein eigener öffentlicher homomorpher Schlüssel $P_i$ und ein dazugehörender geheimer Schlüssel $S_i$ zugewiesen. Zusätzlich besitzt der Daten-konzentrator für jede Messeinrichtung $M_i$ ein digitales Zertifikat, in welchem eine vertrauenswürdige dritte Stelle die Zuordnung zwischen der Messeinrichtung $M_i$ und dem öffentlichen Schlüssel $P_i$ bestätigt. Der Datenkonzentrator verteilt dann das digitale Zertifikat und damit den darin enthaltenen, entsprechenden öffentlichen Schlüssel $P_i$ jeder Messein-richtung $M_i$ an alle anderen intelligenten Messeinrichtungen $M_{j\neq i}$, sodass jede Messeinrichtung neben ihren eigenen Schlüsseln auch die öffentlichen homomorphen Schlüssel P aller anderen Messeinrichtungen kennt.

Bei insgesamt N Messeinrichtungen, die an einem Datenkonzentrator angebunden sind wird jeder in einer

Messeinrichtung $M_i$ ermittelte Messwert $m_i$ in eine Anzahl von N zufälligen Teilwerten $a_{ij}$ zerlegt, sodass

$$m_i = \sum_j a_{ij} \bmod n \qquad \texttt{mit j = 1 .. N} \qquad (1)$$

n ist dabei eine hinreichend große Zahl, beispielsweise die Anzahl der im Datenfeld für Messwerte $m_i$ möglichen Werte. Bei einem Datenfeld der Größe 32 bit wäre n dann $2^{32}$.

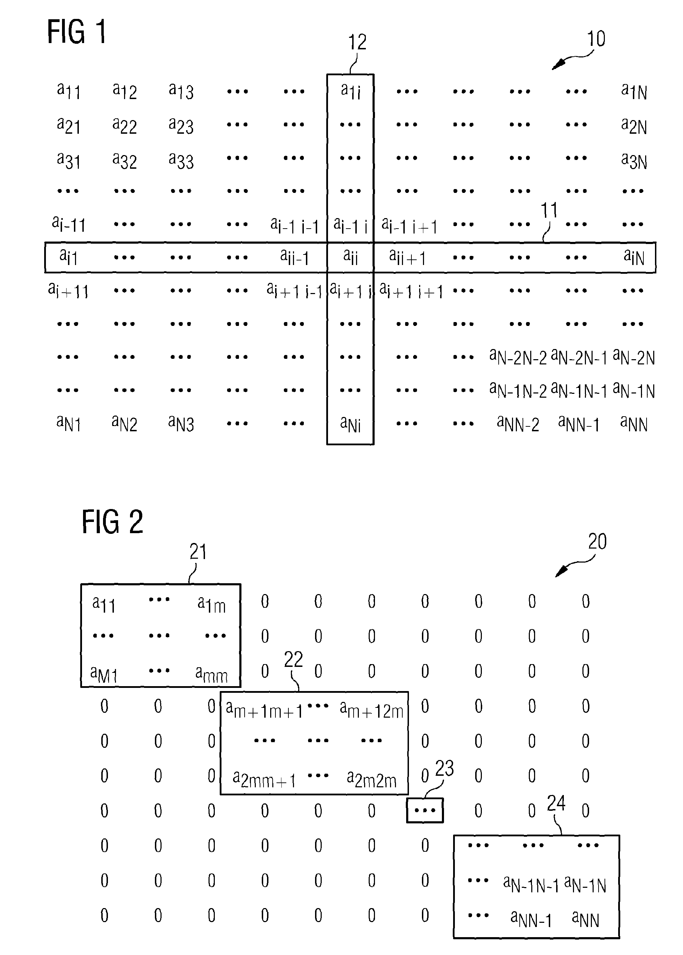

Die Teilwerte aij aller N Messeinrichtungen sind in Figur 1 als Matrix 10 dargestellt. In der umrandeten Zeile 11 sind beispielsweise die Teilwerte der intelligenten Messeinrichtung $M_i$ enthalten.

Anschließend verschlüsselt die Messeinrichtung $M_i$ alle diese Zahlen $a_{ij}$ außer der Zahl $a_{ii}$ mit dem öffentlichen homomorphen Schlüssel $P_j$. einer anderen Messeinrichtung $M_j$, und erhält

$$y_{ij} := \{a_{ij}\} P_j. \qquad (2)$$

Diese Zahlen $y_{ij}$ ($i{\neq}j$) werden dann an den Datenkonzentrator übertragen. Den einen nicht verschlüsselten Teilwert $a_{ii}$ behält die Messeinrichtung $M_i$ für sich.

Der Datenkonzentrator multipliziert dann für jede Messeinrichtung $M_i$ die von den jeweils anderen Messeinrichtungen $M_j$ ($i{\neq}j$) erhaltenen, mit dem öffentlichen Schlüssel $P_i$ der Messeinrichtung $M_i$ verschlüsselten Teilwerte $y_{ji}$. Dies entspricht dem Produkt der Teilwerte der Spalte 12 der Matrix 10, ausgenommen dem Teilwert $a_{ii}$. Dieses Produkt ist wegen der Eigenschaft der Homomorphie gleich der Verschlüsselung der Summe der Teilwerte $a_{ij}$:

$$\prod_{j \neq i}(y_{ji}) = \left\{ \sum_{j \neq i} a_{ji} \right\} P_i \qquad (3)$$

Dieser Wert der Gleichung (3) wird an die Messeinrichtung $M_i$ gesendet, welche die Entschlüsselung mit dem geheimen Schlüssel $S_i$ vornimmt, den fehlenden Teilwert $a_{ii}$ dazu addiert und anschließend die Summe aller Werte an den Datenkonzentrator zurücksendet.

Der Datenkonzentrator sammelt die empfangenen Werte aller Messeinrichtungen, summiert diese und erhält damit die Summe

$$m = \sum_i m_i = \sum_i \left( \sum_i a_{ji} \right) \bmod n \qquad (4).$$

Der so aggregierte Messwert m wird vom Datenkonzentrator beispielsweise an eine Auswertestelle weiter gesendet.

Der Datenkonzentrator kennt somit zwar die Summe der Messwerte, zum Beispiel den Energieverbrauch, der von allen Messeinrichtungen gemeinsam ermittelt wurde, kann aber keine Rückschlüsse auf die Werte einzelner Messeinrichtungen ziehen.

Die gesamte Kommunikation zwischen Datenkonzentrator und den Messeinrichtungen sowie auch zwischen Datenkonzentrator und der Auswertestelle wird dabei vorzugsweise mit Protokollen wie TLS oder IPsec zusätzlich gegen unbefugte Veränderung und gegebenenfalls gegen unbefugtes Abhören geschützt.

Eine Messeinrichtung $M_i$ muss somit N-1 Werte verschlüsseln und erhält einen Summenwert vom Datenkonzentrator zum Entschlüsseln. Der Datenkonzentrator erhält für jede der N Messeinrichtungen jeweils N-1 verschlüsselte Werte zur Multiplikation, muss also für jede der N Messeinrichtungen jeweils N-2 Multiplikationen durchführen. Dies ergibt insgesamt N*(N-2) Multiplikationen. Nimmt man für N den Wert 300 an, der in der typischen Größenordnung der an einen Datenkonzentrator in einer Ortsnetzstation angeschlossenen Messeinrichtungen liegt, so sind dies etwa 90.000 Multiplikationen. Der Rechenaufwand in jeder einzelnen Messeinrichtung wird hauptsächlich durch die Verschlüsselung generiert, die mit zwei Exponentiationen deutlich höher als eine Multiplikation liegt. Bei einem Square-and-Multiply-Verfahren und einem Exponenten n der Länge 256 und wiederum 300 Messeinrichtungen sind dies ca. 75.000 Multiplikationen. Ein solcher Rechenaufwand kann lediglich von leistungsfähigen Messeinrichtungen schnell durchgeführt werden, insbesondere bei typischerweise einigen hundert Messeinrichtungen pro Ortsnetzstation und Wiederholraten

**EP 2 852 174 A1**

im Sekundentakt.

Es ist die Aufgabe der vorliegenden Erfindung, ein Verfahren und ein System zu schaffen, bei dem auch einfache Messeinrichtungen ein no-leakage-Protokoll hinreichend schnell bewältigen können.

Die Aufgabe wird durch die in den unabhängigen Ansprüchen beschriebenen Maßnahmen gelöst. In den Unteransprüchen sind vorteilhafte Weiterbildungen der Erfindung dargestellt.

In dem erfindungsgemäßen Verfahren zur Aggregation von Messwerten zur Überwachung und Steuerung eines Verteilnetzes werden die Messwerte von einer Anzahl N intelligenten Messeinrichtungen ermittelt und an einen Datenkonzentrator unter Verwendung eines no-leakage-Protokolls übermittelt und aggregiert, wobei als erster Verfahrensschritt die N Messeinrichtungen in K Untergruppen mit $N_l$ bis $N_k$ Messeinrichtungen zugeordnet werden und im nächsten Verfahrensschritt das no-leakage-Protokoll auf jede einzelne Untergruppe angewendet wird, wobei in jeder Messeinrichtung $M_k$ der Untergruppe K jeweils $N_k$ Teilwerte gebildet werden.

Dies reduziert die Anzahl der Verschlüsselungen in einer Messeinrichtung $M_k$ in einer Untergruppe mit beispielsweise $N_k$ = 10 Messeinrichtungen und insgesamt N = 300 mit einem Datenkonzentrator verbunden Messeinrichtungen auf $N_k$-1 = 9 Verschlüsselungen, im Gegensatz zu N-1 = 299 Verschlüsselungen bei Anwendung des no-leakage-Protokolls auf alle N mit dem Datenkonzentrator verbunden Messeinrichtungen. Im Datenkonzentrator fallen statt 90.000 Multiplikationen nach dem ursprünglichen Verfahren lediglich N*($N_k$-2) Multiplikationen, also 2400 Multiplikationen für die N=300 Messeinrichtungen in 30 Untergruppen mit jeweils $N_k$=10 Messeinrichtungen an. N ist dabei die Gesamtanzahl der Messeinrichtung, welche mit dem Datenkonzentrator verbunden sind.

In einer vorteilhaften Ausführungsform umfasst eine Untergruppe mindestens 5 intelligente Messeinrichtungen, bevorzugt mindestens 10 intelligente Messeinrichtungen. Bereits bei dieser geringen Anzahl an Messeinrichtungen ist sehr schwierig oder nicht mehr möglich, dedizierte Rückschlüsse auf die Messwerte einzelner Messeinrichtungen zu ziehen und auch bei längerer Datenaufnahme Verbrauchsprofile zu erstellen. Andererseits wird der Rechenaufwand pro Messeinrichtung und somit auch die Aggregationszeit signifikant reduziert. Außerdem können bei Ausfall oder Störung einer Messeinrichtung immer noch die Messwerte der anderen Untergruppen, in denen diese Messeinrichtung nicht enthalten ist, erfasst werden; lediglich der Messwert der Untergruppe, welche die fehlerhafte Messeinrichtung enthält, können nicht mehr erfasst werden.

In einer vorteilhaften Ausführungsform werden möglichst alle Untergruppen mit einer ungefähr gleichen Anzahl $N_l$ von intelligenten Messeinrichtungen gebildet. Somit wird in einer Vielzahl von Messeinrichtungen ein Aggregationsverfahren mit der gleichen Anzahl von Teilwerten verwendet, was dazu führt, dass diese Messeinrichtungen bei gleicher Hardware-Ausstattung und Implementierung des Aggregationsverfahrens auch ungefähr gleich lange für die Durchführung brauchen und ihre Ergebnisse etwa zeitgleich an den Datenkonzentrator zurückliefern. Es muss dann nicht auf eine oder mehrere Gruppen besonders lange gewartet werden.

In einer vorteilhaften Ausführungsform werden intelligente Messeinrichtungen von gleichem Verbrauchertyp einer Untergruppe zugeordnet. Dies ermöglicht eine Minimierung der Anzahl von Messeinrichtungen pro Untergruppe bei gleicher Sicherheit gegen Analyse von Einzelprofilen, da bei gleichen Verbrauchertypen, das heißt nur Privathaushalte oder nur Gewerbebetriebe ähnlicher Größe in einer Untergruppe, auch die Profile sich nur wenig unterscheiden.

In einer vorteilhaften Ausführungsform wird die Zuordnung von Messeinrichtungen zu einer Untergruppe bei verschiedenen, zeitlich aufeinanderfolgenden Messungen variiert. Dies ermöglicht insbesondere ein schnelles Aufspüren einer defekten oder manipulierten Messeinrichtung, da das Auftreten von ungewöhnlichen Messergebnissen in den verschiedenen Untergruppen mit dem Verlauf der zugeordneten Messeinrichtungen korreliert werden kann und somit das Auftreten eines Fehlers im Ergebnis der Untergruppe Aufschluss über die fehlerhafte Messeinrichtung gibt.

In einer vorteilhaften Ausführungsform wird die Anzahl der Messeinrichtungen in einer Untergruppe abhängig von der Performanz der Messeinrichtungen bestimmt. Dies erlaubt eine Optimierung der Erfassungszeiten bzw. Aggregationszeiten im Ortsnetz, da die Aggregationszeit einer Untergruppe im Wesentlichen durch die Messeinrichtung mit der niedrigsten Performanz bestimmt wird. Somit kann in einem Ortsnetz mit beispielsweise unterschiedlich performanten Messeinrichtungen sehr schnell eine gute Abschätzung des Verbrauchs ermittelt werden, wenn die Untergruppen mit hochperformanten Messeinrichtungen sehr schnell ein Ergebnis liefern, das den Hauptanteil des Gesamtergebnisses ausmacht oder für das Gesamtergebnis repräsentativ ist. Die Untergruppen weniger performanten Messeinrichtungen liefern dann zeitverzögert ihre Ergebnisse nach.

In einer weiteren Ausführungsform werden neu hinzugefügte Messeinrichtungen einer neuen oder vorbestimmten Untergruppe zugeordnet. Somit kann einerseits ein korrektes Arbeiten von neuen Messeinrichtungen durch Überwachung der vorbestimmten Untergruppe überprüft werden. Andererseits können die existierenden Untergruppen auch bei einem Netzausbau unverändert weitergeführt werden.

Das erfindungsgemäße System zur Aggregation von Messwerten zur Überwachung und Steuerung eines Verteilnetzes umfasst eine Anzahl N von intelligenten Messeinrichtungen, die mit einem Datenkonzentrator verbunden sind. Der Datenkonzentrator weist eine Zuordnungseinheit auf, die ausgebildet ist, um die N Messeinrichtungen in K Untergruppen mit $N_l$ bis $N_k$ Messeinrichtungen zuzuordnen und diese Zuordnung an die N Messeinrichtungen mitzuteilen. Der Datenkonzentrator und jede Messeinrichtung weist zusätzlich eine Aggregationseinheit auf, die ausgebildet ist, um

4

das no-leakage-Protokoll auf jede Untergruppe anzuwenden, wobei in jeder Messeinrichtung $M_k$ der Untergruppe K jeweils $N_k$ Teilwerte gebildet werden.

Dies hat den Vorteil, dass insbesondere auch niederperformante Messeinrichtungen in einem großen Ortsnetz mit einer hohen Anzahl N an Messeinrichtungen eingesetzt werden können und andererseits die Erfassungs- beziehungsweise Aggregations- und Übermittlungszeit optimiert wird. Des Weiteren sind Messeinrichtungen mit geringeren Speicherkapazitäten einsetzbar, da die Anzahl der zu speichernden öffentlichen Schlüssel P von der Anzahl der Messeinrichtungen pro Untergruppe abhängt.

Es wird des Weiteren ein Computerprogramm mit Programmbefehlen zur Durchführung des beschriebenen Verfahrens beansprucht, das sowohl in den Messeinrichtungen als auch im Datenkonzentrator eingesetzt wird sowie ein Datenträger, der das Computerprogramm speichert, beansprucht.

Ausführungsbeispiele des erfindungsgemäßen Verfahrens, sowie des erfindungsgemäßen Systems sind in den Zeichnungen beispielhaft dargestellt und werden anhand der nachfolgenden Beschreibung näher erläutert. Es zeigen:

Fig. 1 ein Ausführungsbeispiel einer Matrix aller Teilsummen bei Anwendung eines no-leakage-Protokolls auf ein Ortsnetz mit N Messeinrichtungen, die mit einem Datenkonzentrator verbunden sind, gemäß dem Stand der Technik;

Fig. 2 eine Ausführungsbeispiel einer Matrix aller Teilsummen bei Anwendung eines no-leakage-Protokolls auf ein Ortsnetz mit N Messeinrichtungen gemäß dem erfindungsgemäßen Verfahren; und

Fig. 3 ein erfindungsgemäßes Ausführungsbeispiel eines Systems von Messeinrichtungen, die in Untergruppen zur Aggregation der Messwerte zugeordnet sind, in schematischer Darstellung.

Die beschriebenen und/oder gezeichneten Merkmale können im Rahmen der Erfindung vorteilhaft miteinander kombiniert werden. Die Erfindung ist nicht auf die beschriebenen Ausführungsbeispiele beschränkt.

Fig. 1 zeigt eine Matrix 10, die die in allen Messeinrichtungen N gebildeten Teilwerte $a_{ij}$ gemäß dem Stand der Technik umfasst. Beispielhaft sind die gebildeten Teilwerte $a_{ij}$ des ermittelten Messwerts der Messeinrichtung $M_i$ in der mit einem Rahmen markiert Zeile 11 der Matrix hervorgehoben. Alle Teilwerte $a_{ij}$ mit Ausnahme des Teilwertes $a_{ii}$, also N-1 Teilwerte, müssen von der Messeinrichtung $M_i$ verschlüsselt werden. Im Datenkonzentrator müssen ebenfalls N-2 Multiplikationen der N-1 Werte in der Spalte 12 durchgeführt werden und an die Messeinrichtung $M_i$ zurückgesandt werden. Die Messeinrichtung $M_i$ entschlüsselt den empfangenen Wert, addiert den zurückbehaltenen Teilwert $a_{ii}$ und schickt diesen Wert an den Datenkonzentrator zurück. Somit sind in der Messeinrichtung N-1 Verschlüsselungen und eine Entschlüsselung durchzuführen, der Datenkonzentrator muss ca. 90.000 Multiplikationen durchführen bei einem Ortsnetz mit N=300 Messeinrichtungen, die an einen Datenkonzentrator angeschlossen sind.

Fig. 2 zeigt dagegen die Teilwerte der N Messeinrichtungen, die beim erfindungsgemäßen Verfahren zur Berechnung durch die Messeinrichtungen gebildet und bearbeitet werden müssen. Dazu wird jede Messeinrichtung $M_i$ einer Untergruppe zugeordnet. In Fig. 2 sind die Teilwerte $a_{ll}$ bis $a_{mm}$ einer ersten Teilgruppe mit m Messeinrichtungen im Bereich 21 dargestellt. Ein Teilwert $a_{23}$ ist dabei ein Teilwert der Messeinrichtung $M_2$ der mit dem öffentlichen Schlüssel der Messeinrichtung $M_3$ verschlüsselt wird. Die weiteren Teilwerte $a_{1m+1}$ bis $a_{1N}$ der Zeilen 1 bis m haben den Wert 0, da lediglich für die Messeinrichtungen $M_l$ bis $M_m$ Teilwerte gebildet werden.

Entsprechend zeigt die Matrix 20 die Teilwerte einer zweiten, dritten und vierten Untergruppe in den Bereichen 22, 23, 24. Alle Untergruppen und somit auch Teilbereiche umfassen hier beispielsweise die gleiche Anzahl m an Messeinrichtungen bzw. Teilwerten.

Ist die Gesamtanzahl N aller Messeinrichtungen, die an einem Datenkonzentrator angeschlossen sind, nicht ohne Rest durch die Anzahl m Messeinrichtungen pro Untergruppe teilbar, so kann beispielsweise eine unvollständige Restgruppe gebildet werden. Dabei ist aber Voraussetzung, dass diese Restgruppe, beispielsweise Untergruppe 23, mindestens 5, bevorzugt mindestens 10, Messeinrichtungen umfasst, um sicherzustellen, dass kein Rückschluss auf eine einzelne Messeinrichtung beziehungsweise den dazugehörigen Verbraucher gezogen werden kann. Alternativ können mehrere Untergruppen um jeweils eine Messeinrichtung oder aber auch mehrere Messeinrichtungen vergrößert werden bis alle restlichen Messeinrichtungen einer Untergruppe zugeordnet sind.

Dabei ist es besonders vorteilhaft, möglichst viele Untergruppen mit der gleichen Anzahl m von intelligenten Messeinrichtungen $M_i$ zu bilden. Dies erlaubt eine kostenoptimierte und auch zeitoptimierte Lösung, da die Aggregationszeiten der Untergruppen in etwa gleich sind. Andererseits kann durch eine kleine Anzahl von Messeinrichtungen pro Untergruppe das no-leakage-Verfahren auch in Software implementiert sein, da der Rechenaufwand im Vergleich zum no-leakage-Protokoll über die gesamten N Messeinrichtungen des Ortsnetzes stark reduziert ist.

Durch die Aufteilung in Untergruppen kann eine genauere Analyse des Verbrauchs im Ortsnetz durchgeführt werden. So können beispielsweise jeweils Messeinrichtungen nahe der Leistungseinspeisung aus dem Mittelspannungsnetz bzw. weit davon entfernt gesondert in je eine Untergruppe zugeordnet werden und somit die Messdaten in diesen Teilbereichen des Ortsnetzes gesondert betrachtet werden.

Andererseits kann durch eine unterschiedliche Zuordnung der Messeinrichtungen zu Untergruppen bei verschiedenen Messungen das Aufspüren von eventuell defekten oder manipulierten Messeinrichtungen erleichtert werden. Zeigen sich beispielsweise jeweils ungewöhnliche Endergebnisse in verschiedenen nacheinander zugeordneten Untergruppen, so kann davon ausgegangen werden, dass die manipulierte oder defekte Messeinrichtung jeder der genannten Untergruppen zugeordnet war. Die Messeinrichtung, auf die dieses Kriterium zutrifft, ist somit als Fehlerquelle identifiziert.

Wird dennoch nur der Gesamtwert der an den Messeinrichtungen ermittelten Verbrauchswerte benötigt, so kann der Datenkonzentrator durch einfache Addition der Teilsummen der Teilgruppen diese leicht berechnen.

Es können ebenfalls Messeinrichtungen von gleichen Verbrauchertypen einer Untergruppe zugeordnet werden. Bei vielen gleichen Verbrauchergruppen können natürlich mehrere Untergruppen jeweils mit Messeinrichtungen von gleichen Verbrauchertypen gebildet werden. Dabei kann die Anzahl der Messeinrichtungen in einer Untergruppe abhängig von der Performanz der Messeinrichtungen bestimmt werden. Somit kann die Zeit zur Aggregierung und Übermittlung der einzelnen Messwerte zeitlich optimiert werden. Dazu werden beispielsweise Untergruppen mit einer geringen Anzahl von nieder performanten Messeinrichtungen gebildet und eine Anzahl von Untergruppen mit einer größeren Anzahl an hoch performanten Messeinrichtungen gebildet, die aber in Summe die gleiche Aggregation- und Übermittlungszeit aufweisen.

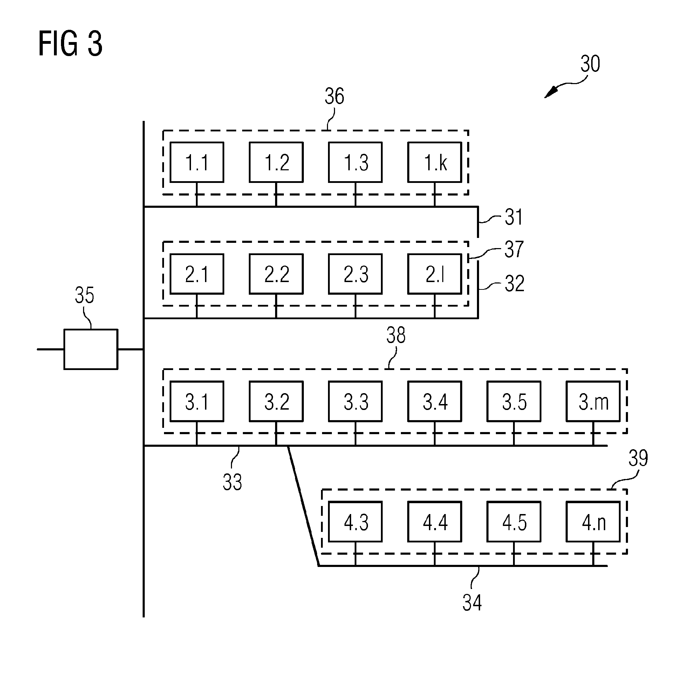

In Fig. 3 ist ein beispielhaftes System 30 mit Messeinrichtungen 1.1, .., 4.n dargestellt, die mit einem Datenkonzentrator 35 verbunden sind. Die Messeinrichtungen 1.1, 1.2, 1.3, .., 1.k sind dabei an einem Strang 31 des Verteilnetzes 30 angebunden. Die Messeinrichtungen 2.1, 2.2, 2.3, .., 2.1 sind über einen zweiten Strang 32 mit dem Datenkonzentrator 35 verbunden. Die Messeinrichtungen 3.1, .., 3.m bilden einen Strang 33, die Messeinrichtungen 4.3, .., 4.n bilden einen Seitenstrang 34 zum Strang 33. Zur Performanz-optimierten Aggregation von Messwerten zur Steuerung des Verteilnetzes 30 wurden die Messeinrichtungen 1.1, .., 1.k einer Untergruppe 36, die Messeinrichtungen 2.1, .., 2.1 einer Untergruppe 37 zugeordnet. Eine dritte Untergruppe 38 umfasst die Messeinrichtungen 3.1, .., 3.m, die Untergruppe 39 die Messeinrichtungen 4.3, 4.4, .., 4.n.

In einem optimierten Teilnetz umfassen beispielsweise die Untergruppen 36 und 37 die gleiche Anzahl an Messeinrichtungen, die jeweils dem gleichen Verbrauchertypen zugeordnet sind. Beispielsweise sind lediglich Privathaushalte beziehungsweise deren Messeinrichtungen in den Untergruppen 36 und 37 zugeordnet. In der Untergruppe 38 sind besonders hochperformante Messeinrichtungen zugeordnet. Die Anzahl der Messeinrichtungen in der Teilgruppe 38 ist aber beispielsweise größer als die Anzahl der Messeinrichtungen in den Gruppen 36 und 37. In der Untergruppe 39 ist beispielsweise eine geringe Anzahl von nieder performanten Messeinrichtungen gruppiert.

Durch die Aufteilung in Untergruppen 36, 37, 38, 39 reduziert sich der Rechenaufwand sowohl für die Messeinrichtungen 1.1, .., 4.n, als auch für den Datenkonzentrator 35 erheblich. Damit ist es möglich, die aktuellen Messwerte der Messeinrichtungen 1.1, .., 4.n in sehr kurzen Intervallen, beispielsweise im Sekundentakt, abzufragen und somit auch Ortsnetze 30 mit sehr kurzfristig schwankender Leistungsentnahme steuern zu können.

Die beschriebenen und/oder gezeichneten Merkmale können im Rahmen der Erfindung vorteilhaft miteinander kombiniert werden. Die Erfindung ist nicht auf die beschriebenen Ausführungsbeispiele beschränkt.

## Patentansprüche

1. Verfahren zur Aggregation von Messwerten zur Überwachung und Steuerung eines Verteilnetzes (30), die von einer Anzahl N intelligenten Messeinrichtungen (1.1, .., 4.n) ermittelt und an einen Datenkonzentrator (35) unter Anwendung eines no-leakage-Protokolls übermittelt und aggregiert werden, mit den Verfahrensschritten:

   - Zuordnen der N Messeinrichtungen (1.1, ..,4.n) in K Untergruppen (36, 37, 38, 39) mit $N_l$ bis $N_k$ Messeinrichtungen,
   - Anwenden des no-leakage Protokolls auf jede einzelne Untergruppe (36, 37, 38, 39), wobei in jeder Messeinrichtung $M_k$ der Untergruppe K jeweils $N_k$ Teilwerte gebildet werden.

2. Verfahren nach Anspruch 1, wobei eine Untergruppe (36, 37, 38, 39) mindestens 5 intelligente Messeinrichtungen (1.1, .., 4.n), bevorzugt mindestens 10 intelligente Messeinrichtungen (1.1, .., 4.n) umfasst.

3. Verfahren nach Anspruch 2, wobei möglichst viele Untergruppen mit einer gleichen Anzahl m von intelligenten Messeinrichtungen (1.1, .., 4.n) gebildet werden.

4. Verfahren nach einem der Ansprüche 1 bis 3, wobei intelligente Messeinrichtungen (1.1, .., 4.n) von gleichen Verbrauchertypen einer Untergruppe (36, 37, 38, 39) zugeordnet werden.

5. Verfahren nach einem der Ansprüche 1 bis 4, wobei die Zuordnung von Messeinrichtungen (1.1, .., 4.n) zu einer Untergruppe (36, 37, 38, 39) bei verschiedenen, zeitlich aufeinanderfolgenden Messungen variiert wird.

6. Verfahren nach einem der Ansprüche 1 bis 5, wobei die Anzahl der Messeinrichtungen (1.1, .., 4.n) in einer Untergruppe abhängig von der Performanz der Messeinrichtungen (1.1, .., 4.n) bestimmt wird.

7. Verfahren nach einem der Ansprüche 1 bis 6, wobei neu hinzugefügte Messeinrichtungen (4.1, .., 4.n) in einer neuen oder vorbestimmten Untergruppe (39) zugeordnet werden.

8. System zur Aggregation von Messwerten zur Überwachung und Steuerung eines Verteilnetzes (30), umfassend eine Anzahl N von intelligenten Messeinrichtungen (1.1, .., 4.n) die mit einem Datenkonzentrator (35) verbunden sind, wobei der Datenkonzentrator (35)
eine Zuordnungseinheit aufweist, die ausgebildet ist um die N Messeinrichtungen (1.1, .., 4.n) in K Untergruppen (36, 37, 38, 39) mit $N_l$ bis $N_k$ Messeinrichtungen zuzuordnen und diese Zuordnung an die N Messeinrichtungen (1.1, .., 4.n) mitzuteilen, und
der Datenkonzentrator (35) und jede Messeinrichtung (1.1, .., 4.n) eine Aggregationseinheit aufweist, die ausgebildet ist um das no-leakage-Protokolls auf jede Untergruppen (36, 37, 38, 39) anzuwenden, wobei in jeder Messeinrichtung $M_k$ der Untergruppe K jeweils $N_k$ Teilwerte gebildet werden.

9. Computerprogramm mit Programmbefehlen zur Durchführung des Verfahrens nach Ansprüchen 1-7.

10. Datenträger, der das Computerprogramm nach Anspruch 9 speichert.

EP 2 852 174 A1

**FIG 1**

**FIG 2**

FIG 3

| | Europäisches Patentamt<br>European Patent Office<br>Office européen des brevets | **EUROPÄISCHER RECHERCHENBERICHT** | Nummer der Anmeldung<br>EP 14 18 0516 |
|---|---|---|---|

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| Y | WO 2012/103896 A1 (NEC EUROPE LTD [DE]; UNVERSIDAD DE MURCIA [ES]; GOMEZ MARMOL FELIX [ES] 9. August 2012 (2012-08-09)<br>* Seite 2, Zeilen 6-23 *<br>* Seite 3, Zeile 10 - Seite 4, Zeile 3 *<br>* Seite 5, Zeilen 10-26 *<br>* Seite 7, Zeilen 22-29 *<br>* Seite 9, Zeile 3 - Seite 10, Zeile 2 *<br>* Anspruch 1; Abbildung 2 *<br>----- | 1-10 | INV.<br>H04Q9/00<br>H04L9/00 |
| Y,D | FLAVIO D. GARCIA; BART JACOBS: "Privacy-friendly Energy-metering via Homomorphic Encryption", 6TH WORKSHOP ON SECURITY AND TRUST MANAGEMENT (STM 2010), LETTER NOTES IN COMPUTER SCIENCE, Bd. 6710, 2011, Seiten 226-238, XP002735591,<br>* das ganze Dokument *<br>----- | 1-10 | |
| A | KURSAWE, K; DANEZIS, G; KOHLWEISS, M: PRIVACY ENHANCED TECHNOLOGIES SYMPOSIUM, 2011, Seiten 175-191, XP002735592, WATERLOO<br>* Absatz [0002] *<br>* Absatz [04.5] *<br>* Absatz [0005] *<br>----- | 1,8,9 | **RECHERCHIERTE SACHGEBIETE (IPC)**<br><br>G01D<br>H04L<br>H04Q |

Der vorliegende Recherchenbericht wurde für alle Patentansprüche erstellt

| Recherchenort | Abschlußdatum der Recherche | Prüfer |
|---|---|---|
| Den Haag | 11. Februar 2015 | Barbelanne, Alain |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
........................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 14 18 0516

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

11-02-2015

| Im Recherchenbericht angeführtes Patentdokument | Datum der Veröffentlichung | Mitglied(er) der Patentfamilie | Datum der Veröffentlichung |
|---|---|---|---|
| WO 2012103896 A1 | 09-08-2012 | EP 2540027 A1 | 02-01-2013 |
| | | ES 2448806 T3 | 17-03-2014 |
| | | JP 5500666 B2 | 21-05-2014 |
| | | JP 2013543357 A | 28-11-2013 |
| | | US 2013124850 A1 | 16-05-2013 |
| | | WO 2012103896 A1 | 09-08-2012 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **FLAVIO D. GARCIA ; BART JACOBS.** Privacy-friendly Energy-metering via Homomorphic Encryption. *6th Workshop on Security and Trust Management (STM 2010), Letter Notes in Computer Science,* 2001, vol. 6710, 226-238

- Public-Key cryptosystems based on composite degree residuosity classes. **P. PAILLIER.** Cryptology (EURO-CRYPT' 99). Springer Berlin Heidelberg, 1999, vol. 1592, 223-238